# EUROPEAN PATENT SPECIFICATION

(11) **EP 2 653 054 B1**
(45) Date of publication and mention of the grant of the patent: **01.03.2017**
(21) Application number: 13164358.7
(22) Date of filing: 18.04.2013
(51) Int. Cl.: A45C 11/00, A45C 13/00

(54) **Container for dental items**
Behälter für dentale Artikel
Conteneur pour articles dentaires

(30) Priority: 20.04.2012 IT TO20120351
(43) Date of publication of application: 23.10.2013
(73) Proprietor: Eltek S.p.A., 15033 Casale Monferrato (AL) (IT)
(72) Inventor: Nebbia, Fabio, 15033 Casale Monferrato (Alessandria) (IT); Fiorini, Andrea, 15033 Casale Monferrato (Alessandria) (IT); Gerbaz, Corrado, 15033 Casale Monferrato (Alessandria) (IT); Petruzzi, Adriano, 15033 Casale Monferrato (Alessandria) (IT); Gadini, Costanzo, 15033 Casale Monferrato (Alessandria) (IT)
(74) Representative: Gallarotti, Franco

(56) References cited:
- DE-A1- 10 138 190
- DE-A1- 19 903 980
- US-A- 4 934 534
- US-A- 4 966 319
- US-A- 5 323 787
- US-A1- 2003 176 530
- US-A1- 2004 244 805
- US-A1- 2006 083 710
- US-A1- 2006 113 307
- Anonymous: "Antimicrobial Solutions for Plastic Articles", , 9 January 2010 (2010-01-09), XP002688312, Retrieved from the Internet: URL:http://www.rtpcompany.com/products/col or/antimicrobials.htm [retrieved on 2012-11-29]

## Description

### Field of the invention

The present invention relates in general to containers for dental appliances and devices, and has been developed with particular reference to portable cases for dental appliances for personal use.

### Prior art

When not used, dental appliances for personal use - such as, for example, the so-called "bites" for gnathological use, orthodontic braces, or dental prostheses - are usually put away in a corresponding case. Frequently, the case is made of plastic material in order to enable washing thereof, and very frequently is made of a single piece.

In order to increase the hygienic characteristics, cases for dental appliances have been proposed prearranged for receiving an antibacterial substance.

For example, the German patent application No. DE-A-10138190 proposes a case for dental appliances provided with a detachable and washable padding. The padding is able to absorb the humidity, and the case is fluid-tight to enable the appliances to be kept in moist conditions. Thanks to the absorption capacity of the padding, the latter can be impregnated with an antibacterial collutorium.

The German patent application No. DE-A-19903980 describes a fluid-tight case for dental prostheses of the above sort, equipped on the inside with films for housing prostheses, the films being able to withhold a liquid containing an antibacterial substance.

US-A-5323787 describes a further case for dental prostheses and the like, basically consisting of a case having a base and a lid hinged together. Provided inside the case thus defined is an arched mouthpiece, formed by a thin layer of soft elastomer material, and the base part of the container is configured to be able to withhold a fluid mixture, in particular containing a bactericide.

US-A-4934534 describes a further case for dental appliances, which includes a generally flexible body, comprising a base and a lid interconnected, for example made of a single piece of water-repellent cloth, with a zip fastener. Present within the casing thus defined is a porous padding, which is removable when it is desired to clean the case. The padding may be impregnated with a suitable antiseptic substance, if so desired.

US 2004/244805 A1, upon which the preamble of claim 1 is based, discloses a protective case for a mouthguard, having a base, a cover hinged to the base and a partition on the base adapted to engage the mouthguard and to prevent movement of the mouthguard within the case.

US 2006/083710 A1 discloses a process for making articles antimicrobial and odor inhibiting, which comprises using vacuum deposition and electron beam techniques to graft amino-reactive functional groups onto polymeric material which the article comprises, followed by contacting the polymeric material with a chitosan solution.

US 4966319 A discloses a carrying case for an orthodontal device having a plastic body formed by first and second body portions hingedly connected to one another and including a releasable closure to open and close the first and second body portions.

US 2003/176530 A1 discloses a contact lens case having antimicrobial characteristics composed of a polymeric material having a plurality of amorphous zones incorporating an antimicrobial agent.

US 2006/113307 A1 discloses a liner for portable food storage container having adhesive attached to areas of its outer surfaces for preventing contamination of portable food storage containers. In one embodiment, the liner may be made of an antimicrobial material.

### Object and summary of the invention

The cases envisaged according to the known art mentioned above are relatively complicated to produce and not particularly convenient to use. The present invention basically proposes providing a case for dental appliances and the like, which, albeit designed to guarantee a high degree of hygiene, is simple and economic to produce, as well as easy and practical to use.

The above and other objects still, which will emerge more clearly hereinafter, are achieved according to the present invention by a container for dental articles or devices, preferably for articles for personal use and the like, having the characteristics specified in the annexed claims. Preferred characteristics of the invention are specified in the claims. The claims form an integral part of the technical teaching provided herein in relation to the invention.

In the present description and in the attached claims, the generic term "antimicrobial" is frequently used to indicate a characteristic of a material belonging to the container, as well as a corresponding capacity of action thereof. The aforesaid generic term, use of which is dictated by reasons of practicality of description, should be understood in a broad sense, and as such designating antimicrobial, and/or antiseptic, and/or antibacterial, and/or disinfectant characteristics and capacities of action.

In brief, in accordance with the invention, a container for dental articles is made at least in part of a plastic material englobing an antimicrobial (i.e., antimicrobial, and/or antiseptic, and/or antibacterial, and/or disinfectant) substance, that is, made of a plastic material having antimicrobial (i.e., antimicrobial, and/or antiseptic, and/or antibacterial, and/or disinfectant) capacity.

According to a preferential aspect of the invention, such a container is proposed, in particular for a dental appliance for personal use, comprising a base and a lid that define between them a space for housing the appliances, in which at least one of the base and the lid includes a plastic material englobing an antimicrobial substance, i.e., at least one of the base and the lid is made of a plastic material having antimicrobial capacity.

Thanks to this characteristic, it is the body itself of the container that integrates antimicrobial characteristics, without any need for a user having to add particular antiseptic substances within the container, as instead typically occurs according to the known art, with consequent advantages in terms of practicality, and/or reduction of costs. The fact that the body of the container integrates the antimicrobial substance directly moreover renders particularly simple cleaning of the container itself, which can be washed without any particular care.

The fact that the body of the container integrates directly the antimicrobial substance means that the corresponding (antimicrobial, and/or antiseptic, and/or antibacterial, and/or disinfectant) action is obtained also on outer surfaces of the container, i.e., not only on inner surfaces as in the known solutions. This determines the further advantage of obtaining the aforesaid action also on portions of the body of the container designed for other functions, i.e., not only on the internal portions in contact with dental appliances or devices (such as external portions designed for picking up or opening the container by a user, or portions designed for contact with generic surfaces, for example in the case where the container is rested on a table or put in the pocket of a garment).

In a particularly advantageous embodiment, the aforesaid plastic material is a polymeric material that can be injection-moulded, in particular a copolymer of a random heterophasic type, such as a polypropylene of this family. A material of this type is well suited to receiving an antimicrobial substance in its polymeric structure. A polymer of the type indicated presents moreover the advantage of reducing the risks of deterioration of the container due to repeated bending of parts of the latter. In this way, in an advantageous embodiment, in the body itself of the container there may be created at least in part a hinge between the base and the lid, or at least part of a closing device between the base and the lid. This embodiment presents the further advantage of having at least part of at least one hinge, and/or of a closing device that is made of an antiseptic or disinfectant material. This makes it possible to have the aforesaid material and the corresponding action also in areas or recesses or small cavities that are difficult to reach, and/or difficult to disinfect with external operations, in particular in order to prevent formations of bacteria or microbes or other micro-organisms or pathogenic agents on the aforesaid elements, and/or in the aforesaid recesses or small cavities.

In a particularly advantageous embodiment, the antimicrobial substance englobed in the polymer is a substance with inorganic base, in particular containing an active principle with a base of silver ions. A substance of this type presents the advantages of being usable without particular problems at the typical temperatures of transformation of the thermoplastic polymers and of binding well to the polymeric structure. Moreover, a substance of this type is not toxic, is not corrosive, and is not flammable. A further advantage of the use of an inorganic antimicrobial substance, in particular with a base of silver ions, is that of enabling an antimicrobial action prolonged in time. In this way, as already mentioned, there is avoided the need for periodic replacement of an antimicrobial liquid as envisaged according to the known art. Moreover, washing of the container does not affect the antimicrobial properties of the material, thus facilitating periodic cleaning of the container itself.

Integration of the antimicrobial substance in the body of the container moreover presents the further advantage that the container itself does not necessarily have to be fluid-tight. In this way, in accordance with the invention , at least part of the container can be provided with at least one opening, such as an opening between the inside and the outside of the container, preferably an opening for ventilation or draining. In particular, at least one of the base and the lid of the container defines a wall, such as a bottom wall, with a region provided with one or more through openings or openings between the inside and the outside of the container.

The through openings thus enable draining of possible liquids from the housing space, and/or exit of humidity present therein, for example liquids used for washing the dental appliance or also possible organic fluids, such as saliva, that may be present on the appliance appliance inserted in the container, also in the form of liquids that have evaporated or that determine the aforesaid humidity.

The at least the region of the aforesaid wall provided with one or more through openings is made of the plastic material including the antimicrobial substance. In this way, also in the case where the surface tensions of the fluid do not enable an adequate draining of the liquid, this can in any case be expelled via a circulation of air, and/or via an exit of humidity through the through openings, preferably also preventing proliferation of pathogenic agents in conditions of humidity inside the container. The presence of the antimicrobial substance prevents proliferation of microbes, and/or other pathogenic agents at each opening, in particular preventing formations that might obstruct such opening, consequently possibly causing the corresponding function of draining, and/or ventilation to cease.
The wall provided with the through openings has, in a surface thereof external to the housing space, at least one resting element, in particular a plurality of resting elements. The at least one resting element preferably comprises at least one element in relief, in particular with respect to an outer wall of the container, such as an element fixed with respect to or made of a single piece with the aforesaid wall. The container can hence be rested on a generic surface, with the resting element or elements that keep the corresponding wall at a distance from the aforesaid surface. In this way, the possible through openings of the aforesaid wall can perform effectively their function of draining and/or ventilation. Very preferably, in the case of a number of resting elements, these are local resting elements or in any case are spatially separated from one another, precisely to enable free outflow, and/or free circulation of air underneath or with respect to the aforesaid wall.

In one embodiment, the wall provided with the through openings, in particular a bottom wall, has in a surface thereof internal to the housing space, one or more positioning elements for the dental appliance or device. This positioning element or these positioning elements, which are also preferably made of the plastic material englobing the antibacterial substance, enable the dental appliance to be withheld in a substantially predefined position.

In a particularly advantageous embodiment, the base and the lid of the container are hinged together by means of at least one hinge, which is also at least in part made of plastic material englobing the antimicrobial substance. Very preferably, the entire hinge is made of the aforesaid material. The single hinge or a plurality of hinges can thus be integrated directly in one or both of the parts that form the container.

Advantageously, in such an embodiment, the hinge comprises a part that is elastically deformable, i.e., is formed by a foldable flap made of the polymeric material. As already mentioned previously, the preferred use of a polymer of a random heterophasic type makes it possible to prevent repeated opening/closing of the container, and hence the stresses on the hinge, from causing fast deterioration and subsequent failure of the latter, and/or to prevent an optical or visible alteration of the stressed material, such as a variation in colour or shade of part of the coloured material of the container.

Similar considerations may be made in the case where, in a particularly advantageous embodiment, a part of the container directly defines a part of a closing device, in particular between a base and a lid. Also in this case, advantageously, the aforesaid closing device can envisage an elastically deformable part, to provide a substantially snap-shut closing, in particular between the lid and the base. Also in this case, the use of a random heterophasic polymer prevents phenomena of fast optical deterioration, and/or failure, and/or alteration of the corresponding closing part of the device.

Each of the parts of the container, such as the base and the lid, may be entirely made of plastic material englobing the antimicrobial substance, with the possible integrated or additional members (such as a hinge part or a part of the closing device). Very advantageously, the base and the lid maybe made of a single piece, made of the plastic material englobing the antibacterial substance. In such an embodiment, very advantageously, the aforesaid single piece may define integrally the entire hinge and the entire closing device of the container, or at least one part thereof.

### Brief description of the drawings

Further purposes, characteristics, and advantages of the invention will emerge clearly from the ensuing detailed description, with reference to the annexed drawings, which are provided by way of explanatory and non-limiting example and in which:
- Figures 1 and 2 are perspective views of a container according to the invention in a closed condition and a partially open condition, respectively;
- Figure 3 is a top plan view of the container of Figures 1-2, in the completely open condition;
- Figure 4 is a cross-sectional view according to the line IV-IV of Figure 3;
- Figure 5 is the detail A of Figure 4 at a larger scale;
- Figure 6 is a cross-sectional view according to the line VI-VI of Figure 3;
- Figure 7 is the detail B of Figure 6 at a larger scale;
- Figure 8 is a cross-sectional view according to the line VIII-VIII of Figure 3;
- Figure 9 is the detail C of Figure 8 at a larger scale;
- Figure 10 is a cross-sectional view according to the line X-X of Figure 3;
- Figure 11 is the detail D of Figure 10 at a larger scale;
- Figure 12 is a perspective view of a container provided according to a possible variant of the invention in the completely open condition;
- Figure 13 is a detail similar to that of Figure 11, but regarding the variant of Figure 12;
- Figures 14 and 15 are perspective views of a container in accordance with a second embodiment of the invention in a closed condition and a partially open condition, respectively;
- Figures 16 and 17 are perspective views from different angles of a member of a closing device of the container of Figures 14-15;
- Figure 18 is a perspective view of a portion of a lid of the container of Figures 14-15;
- Figures 19 and 20 are two partially sectioned perspective views of a part of the container of Figures 14-15 including a closing device, in conditions of engagement and release, respectively;
- Figures 21 and 22 are perspective views of a container in accordance with a third embodiment of the invention, in a closed condition and in an open condition, respectively;
- Figure 23 is an exploded view of the container of Figures 21-22;
- Figure 24 is a partially sectioned perspective view of a portion of the container of Figures 21-22 including a closing device;
- Figure 25 is a top plan view of the container of Figures 21-22;
- Figure 26 is a cross-sectional view according to the line XXVI-XXVI of Figure 25;
- Figures 27 and 28 are two sections according to the lines XXVII-XXVII and XXVIII-XXVIII of Figure 25, respectively;
- Figures 29 and 30 are perspective views of cases according to the invention that house respective dental articles;
- Figures 31 and 32 are perspective views of cases according to other possible variant embodiments of the invention; and
- Figures 33 and 34 are a perspective view and a corresponding detail of a further variant of a container according to the invention.

### Description of preferred embodiments of the invention

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" and the like that may be present in various point of the present description do not necessarily refer to one and the same embodiment. Moreover, particular conformations, structures, or characteristics may be combined in any adequate way in one or more embodiments, which may also be different from the ones represented. The references used herein are provided merely for convenience and hence do not define the sphere of protection or the scope of the embodiments.

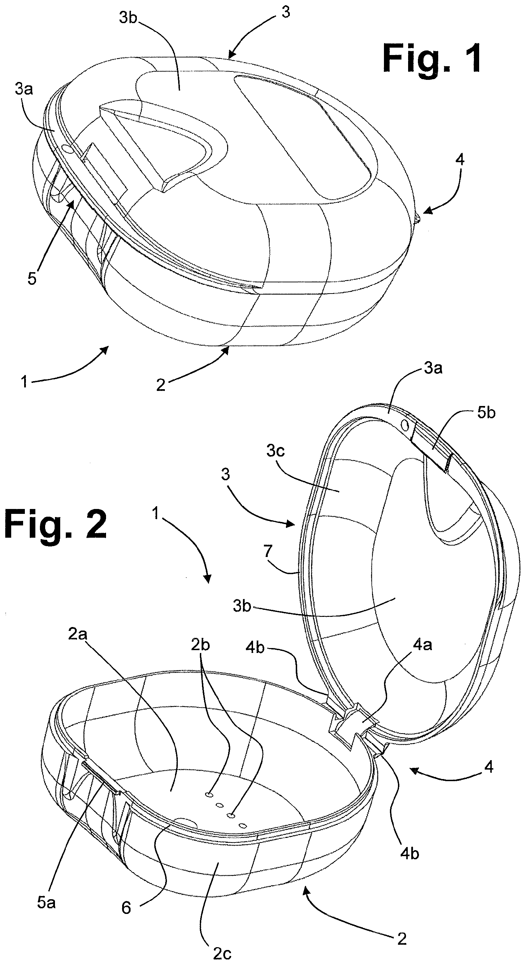

Designated as a whole by 1 in Figures 1-3 is a container according to the present invention, here configured as a portable case for a dental item, in particular a dental appliance for personal use. In the attached figures, the dental appliance is not represented in all the possible forms, since it may of any known type. In this perspective, for example, the dental device may be represented by a gnathological bite, or by a orthodontic device for correction of defects of alignment of teeth, or by a dental prosthesis or set of false teeth.

The case 1 has a relatively rigid or semirigid body, identifiable in which are at least one base 2 and one lid 3, here both generally shaped like a cap, designed to define between them a space for housing the dental device, laterally closed and delimited by peripheral walls of the base and the lid. The base 2 and the lid 3 are articulated to one another by means of a hinge, designated as a whole by 4, defined in a generally rear region of the case 1. On the opposite side of the case 1, i.e., the generally front part, a closing device is provided, designated as a whole by 5. In the embodiment represented, the base 2 and the lid 3 are made of a single piece and define directly between them an elastically flexible element, such as a hinge 4. Advantageously, moreover, also the closing device 5 is defined integrally in the aforesaid single piece, in part in the base 2 and in part in the lid 3, in particular a closing device comprising two engagement elements, at least one of which is flexible.

According to a characteristic of the invention, at least one of the base 2, the lid 3, and preferably also the respective parts of the hinge, and/or of the closing device, include a plastic material that englobes an antimicrobial substance. As already mentioned previously, the preferred plastic material is a polymer, in particular a copolymer, of a random heterophasic type, while the preferred antimicrobial substance is an inorganic-based substance, very preferably containing an active principle with a base of silver ions.

In the case of the embodiment considered herein, then, the single piece that defines at least the base 2 and the lid 3 is completely made of the plastic material englobing the antimicrobial substance, with the hinge 4 and respective parts 5a and 5b of the closing device 5. The aforesaid characteristic, albeit advantageous, is not in any case to be understood as limiting, given that the two parts 2 and 3 of the case 1 may be made at least in part of a number of different materials using known co-moulding techniques, where only one, or at least one portion, of the aforesaid parts 2 and 3 comprises or is constituted by the aforesaid plastic material including the antimicrobial substance.

Also the inclusion in a single piece of the hinge 4, and/or of the closing device 5, or of respective parts, in one of the half-shells that form the case 1 is to be deemed preferential. Formation of the case in a single piece of plastic material englobing the antimicrobial substance proves particularly advantageous from the manufacturing standpoint and from the standpoint of practical use of the case. The case may be produced easily via a single moulding operation, with the accessory elements such as the hinge and the closing device. The conformation consisting of a single piece moreover enables easy washing and simple drying of the case, when the need arises.

In an advantageous embodiment, such as the one represented, the case 2 does not close hermetically, but is instead provided with openings aimed at enabling circulation of air and/or draining of liquids from the internal housing space. In the case exemplified, the base 2 defines a bottom wall 2a, provided in a generally central region of which are one or more through openings 2b. Preferentially, at least the region of the bottom wall 2a provided with the openings 2b is made of the plastic material englobing the antimicrobial substance. As already mentioned, the fact that the region provided with the openings 2b is preferentially made of the plastic material containing the antimicrobial substance inhibits proliferation of microbes precisely in the aforesaid area, in particular within, and/or in the proximity of, the openings 2b.

In an embodiment, such as the exemplified one, the base 2 has a peripheral wall 2c, preferably free of interruptions, that defines, along its upper edge, a lip or relief 6, having a restricted section, compared to the wall 2c. In the example, the lip 6 is not continuous; i.e., it is interrupted in a generally central region 4a of the hinge 4, and/or in a position corresponding to a front tooth 5a, projecting substantially in cantilever fashion from the upper edge of the peripheral wall 2c, designed to co-operate with an elastic engagement element or tab 5b, defined in a generally flange-shaped portion 3a that extends along the front of the lid 3. Preferably, also the lid 3 has a respective bottom wall 3b and a peripheral wall 3c, preferably free of interruptions, defined along the edge of which is a lip or relief 7, having a restricted section, compared to the corresponding wall 3c, designed to couple with the lip 6 of the base 2 to guarantee an efficient closing, and/or a correct positioning between the two parts 2-3. As may be noted, also the lip 7 is preferably interrupted at the central part 4a of the hinge 4, which is a flap that extends substantially spanning the base 2 and the lid 3.

In the example, the hinge 4 then includes two further lateral connection parts 4b, which are also formed integral between base 2 and the lid 3, preferably comprising an intermediate notch substantially perpendicular to the development of the intermediate part 4a, for guiding the movement of opening and closing of the lid 3 with respect to the base 2.

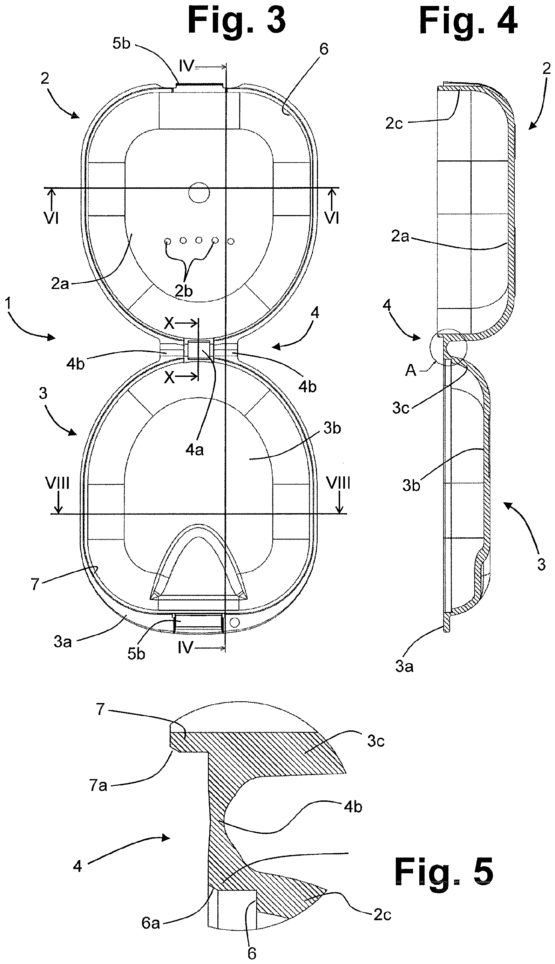

In the sections of Figures 4, 6 and 8 and in the corresponding details of Figures 5, 7 and 9, clearly visible is the cross section of the lateral parts 4b of the hinge 4, as well as the conformation of the lip 6 of the base 2, preferably distinguished by the presence of an inclined plane 6a. Once again from the aforesaid figures it may be noted how also the lip 7 of the lid 3 has an internal profile having a shape congruent with the external profile of the lip 6, preferably with corresponding inclined plane 7a. As has been said, the lips 6 and 7 rise from the upper edge of the walls 2c and 3c, respectively, in which also a contrast surface 6b, 7b, respectively, is defined.

The presence of the inclined planes 6a and 7a facilitates centring during closing of the lid 3 with respect to the base 2, in particular enabling a mutual sliding of the inclined planes 6a and 7a and consequent corresponding displacement of the lid 3 with respect to the base 2, up to the correct position.

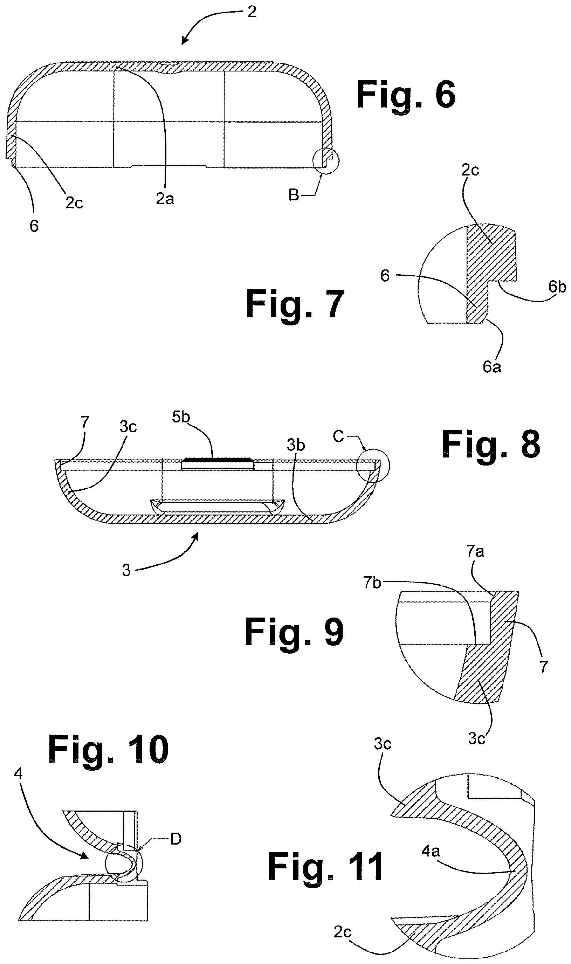

From Figures 10 and 11 there may instead be appreciated the cross section of the central part 4a of the hinge 4, as has been said constituted by a flap that extends spanning the base 2 and the lid 3 (in particular, the figures regard a view of the central part 4a in the condition of Figure 3, i.e., with the base 2 and the lid 3 open at substantially 180°).

During normal use of the case 1, the lid 3 can be moved angularly with respect to the base 2, exploiting the presence of the hinge 4. As has been said, the lateral parts 4b have basically the function of guiding the movement of the lid with respect to the base, preventing torsions of the central part 4a, which preferably performs functions of elastic return of the lid 3 towards the base 2. As has been mentioned, by virtue of the characteristics of the preferred material used, i.e., a polymer of a random heterophasic type, rapid deterioration, and/or alteration of the colour of the material around the hinge 4, with possible subsequent failure, and/or aesthetic damage to the product, is countered.

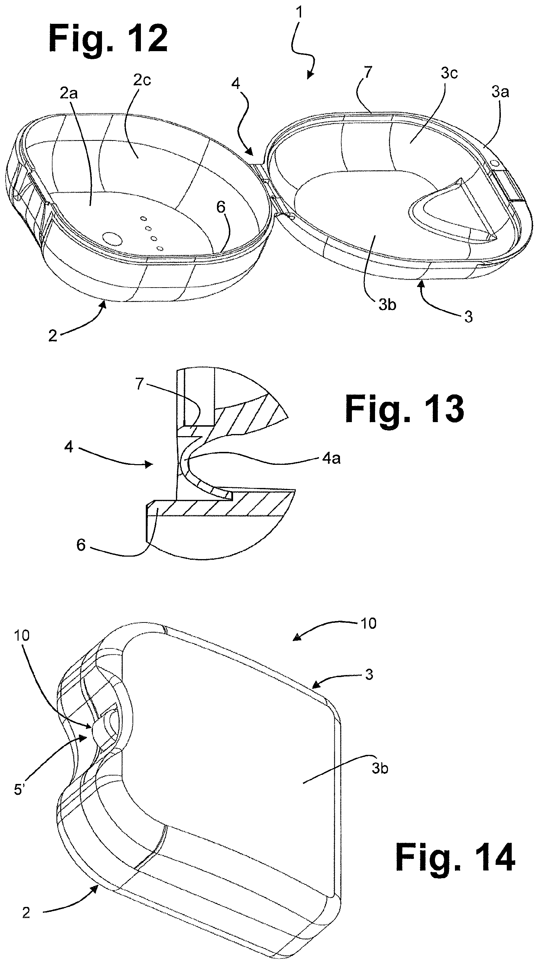

Figure 12 is a perspective view of a variant embodiment of the case of Figures 1-11. In Figure 12, the lid 3 is illustrated in the completely open condition with respect to the base 2, i.e., rotated through approximately 180° with respect thereto. Reaching of the aforesaid position, if so desired, is in any case guaranteed by the presence of the hinge 4 and by the elasticity of the material that makes it up. This embodiment differs from the preceding one substantially as regards the conformation of the lips 6 and 7, which in this case do not have interruptions in the rear part of the base 2 and of the lid 3, i.e., at the hinge 4. The specific conformation of the lips 6, 7 and of the central flap 4a of the hinge 4 may be noted in detail in Figure 13. The lips 6 and 7 may advantageously be configured to provide a respective seal along the closing profile of the case, with the possible addition of sealing means, such as a perimetral gasket. The sealing function of the lips 6 and 7, with the possible added means, may prove useful to prevent leakage of liquids (for example, saliva) from the closing profile of the case, when it is positioned vertically, for example in a pocket of a garment of the user, or in a bag: this also in the presence of the openings 2b that - with the case set vertically - are in any case far higher up than the maximum level that can be reached by any possible saliva present in the case.

Figure 12 is a perspective view of a variant embodiment of the case of Figures 1-11. In Figure 12, the lid 3 is illustrated in the completely open condition with respect to the base 2, i.e., rotated through approximately 180° with respect thereto. Reaching of the aforesaid position, if so desired, is in any case guaranteed by the presence of the hinge 4 and by the elasticity of the material that makes it up. This embodiment differs from the preceding one substantially as regards the conformation of the lips 6 and 7, which in this case do not have any interruptions in the rear part of the base 2 and of the lid 3, i.e., at the hinge 4. The specific conformation of the lips 6, 7 and of the central flap 4a of the hinge 4 may be noted in detail in Figure 13.

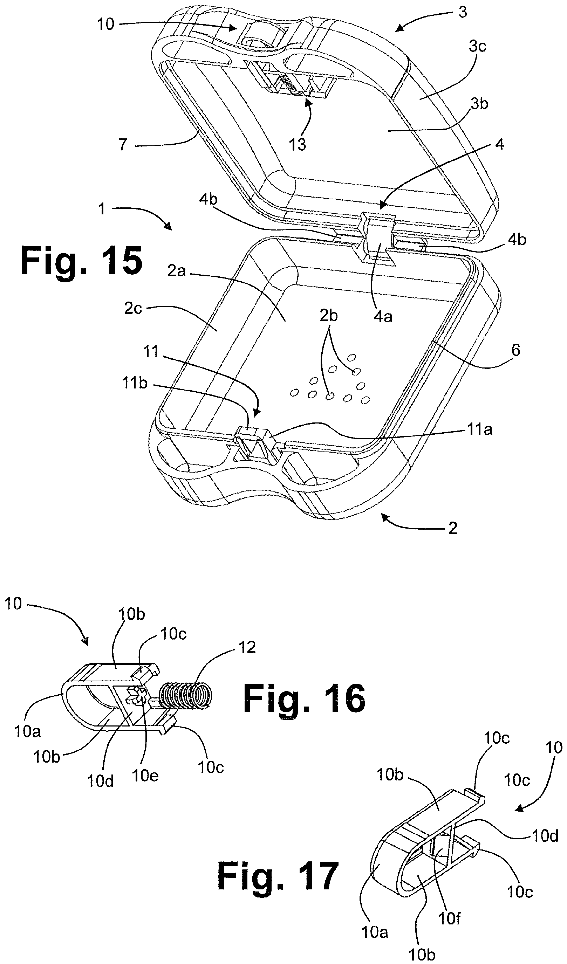

Figures 14 and 15 illustrate a second possible embodiment of a case according to the invention. Also here, the case 1 comprises a base 2 and a lid 3 joined together by means of a hinge 4, substantially of the type already described previously. The general shape of the base 2 and of the lid 3 is here generally quadrangular, but in them there are in general present the same elements described previously, and here designated by the same reference numbers.

Apart from the overall shape, what distinguishes the case of Figures 14-15 from that of Figures 1-11 is the embodiment of the closing device, designated as a whole by 5' in Figure 14, which in this case envisages a substantially pushbutton-operated engagement/release member, designated as a whole by 10 and associated to the lid 3. On the other side, the base 2 is provided with a respective engagement seat, designated as a whole by 11.

Visible in Figures 16 and 17 is a possible embodiment of the pushbutton-operated member 10, the body of which is preferably also formed via moulding of thermoplastic material, for example the same material used for moulding the base 2 and/or the lid 3, including the antimicrobial substance. In the example represented, the body of the pushbutton 10 is generally hollow and substantially U-shaped, with an arched front wall 10a that is intermediate to two straight and substantially parallel walls 10b, having at the distal end a respective external tooth 10c. The walls 10b are joined together by an intermediate wall 10d having on the rear face a relief 10e, designed to receive and/or position thereon the first end of a spring or other elastic element 12. The front face of the intermediate wall 10d is instead provided, at its lower edge, with a tooth 10f.

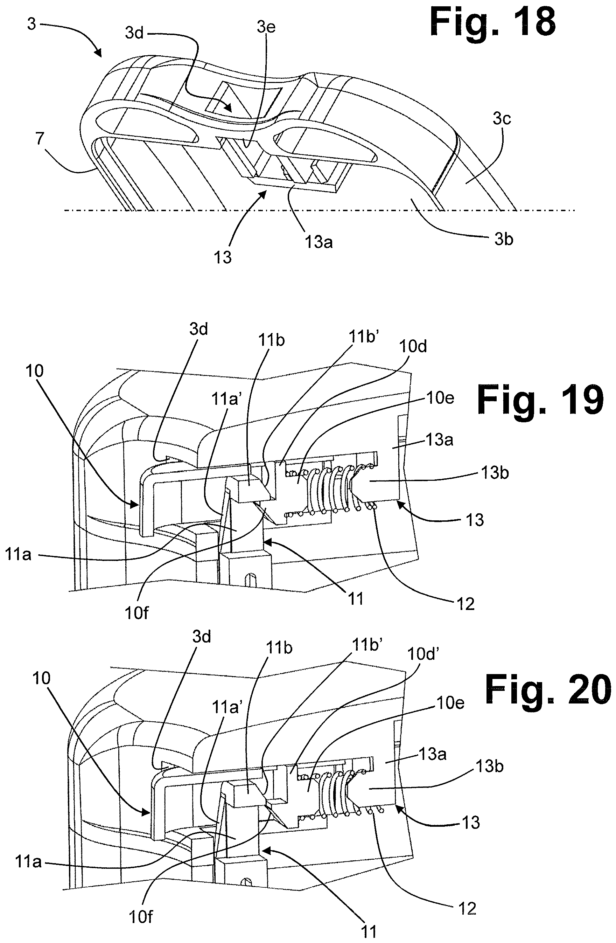

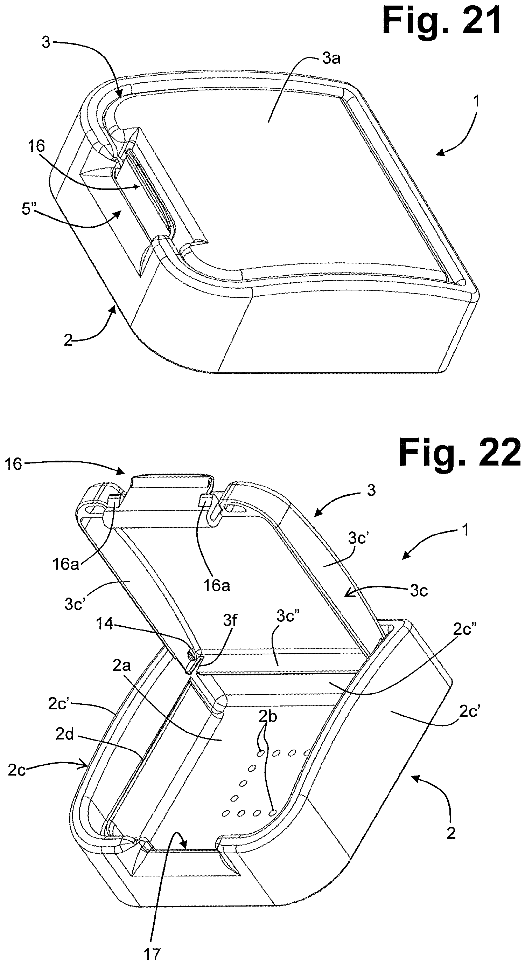

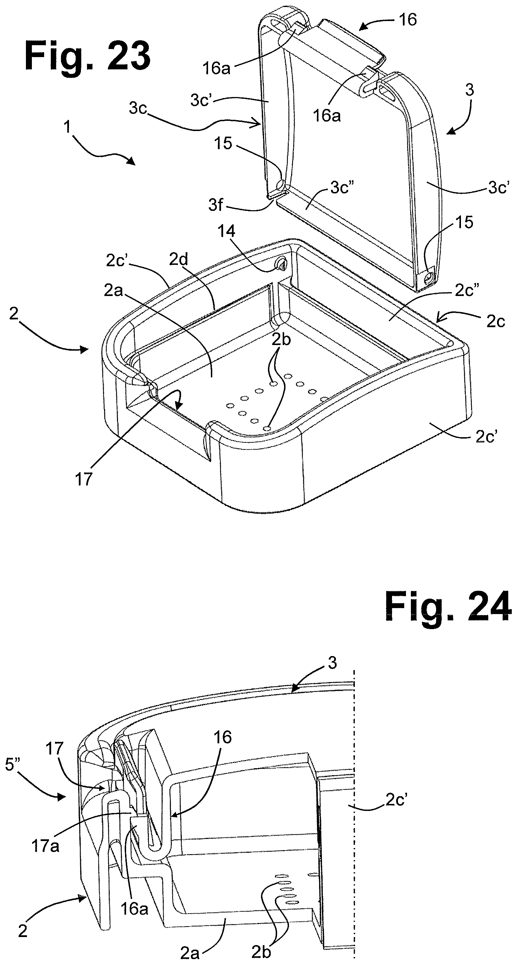

In Figure 18 it may be seen how defined frontally in the peripheral wall 3c of the lid 3 is a through opening 3d having a profile congruent with the external profile of the body of the member 10, i.e., - in the case exemplified - substantially quadrangular. The opening 3d gives out, towards the inside of the wall 3c, onto a seat 13 defined integrally in the body of the lid 3, having a bottom wall 13a from which there rises a relief 13b (Figures 19-20) substantially similar to the relief 10e of the pushbutton-operated member 10, on which there is designed to be fitted, and/or positioned, the second end of the spring 12, as is clearly visible in Figures 22 and 23. Preferably, the structure of the seat 13 is such to isolate the housing space from the opening 3d

The engagement seat 11 provided on the base 2 basically consists of a bridge formation, with two upright parts 11a and an upper cross member 11b. Preferentially, the front face of the uprights 11a and the rear face of the cross member 10b define respective inclined planes 11a' and 11b', respectively, as may be seen in Figures 19-20. Preferentially, the lid 3 defines a lead-in - designated by 3e in Figure 18 - for the seat 11, in the edge of the peripheral wall 3c, substantially in a position corresponding to the seat 13.

For the purposes of assembly, the rear end of the spring 12 is fitted on the relief 13b, and the member 10 is inserted in the corresponding opening 3d with the other end of the spring fitted on the corresponding relief 10e. Exploiting the elasticity of the material constituting the body of the member 10, the latter can be inserted and pushed into the opening 3d, with the side walls 10b (Figures 16-17) slightly bent inwards. When the teeth 10c exceed the internal limit of the opening 3d, the walls 10b can return elastically into the original condition, with consequent engagement of the teeth 10c with respect to the edge of the opening itself. In this way, the member 10 is withheld in the opening 3d countering the action of the spring 12.

When the lid 3 has to be closed on the base 2, it is sufficient to exert a pressure of the former on the latter. The bridge seat 11 can penetrate into the hollow area of the body of the member 10 comprised between the curved front wall 10a and the intermediate wall 10d. The relative centring is ensured by the cooperation between the inclined planes 11a' of the uprights 11 and the surface of the lead-in 3e. In the aforesaid step, the front inclined plane of the tooth 10f of the member 10 can slide on the rear inclined plane 11b' of the cross member 11b of the seat 11 itself: in this way, the member 10 can recede countering the action of the spring 12 until the tooth 10f is able to engage the cross member 11b, with a substantially snap-shut engagement, by simply pressing the lid on the base. In the aforesaid condition, as may be seen in Figure 19, the spring 12 pushes the member 10 outwards, thus keeping the tooth 10f engaged on the cross member 11b, in a condition of engagement of the lid 3 with respect to the base 2. To bring about opening of the device 5' it is sufficient to apply a pressure on the member 10 to overcome the elastic reaction of the spring 12, until the tooth 10f is brought to disengage from the cross member 11b. At this point, the lid 3 can be raised from the base 2, possibly also thanks to the elastic action exerted by the intermediate part 4a of the hinge 4.

Provision of a closing device 5' does not particularly complicate the embodiment of the case, enabling the operations of opening and closing by the user to be rendered simpler and more intuitive.

Figures 21-23 illustrate a further possible embodiment of the case 1, here distinguished by a base 2 and a lid 3 configured as distinct parts.

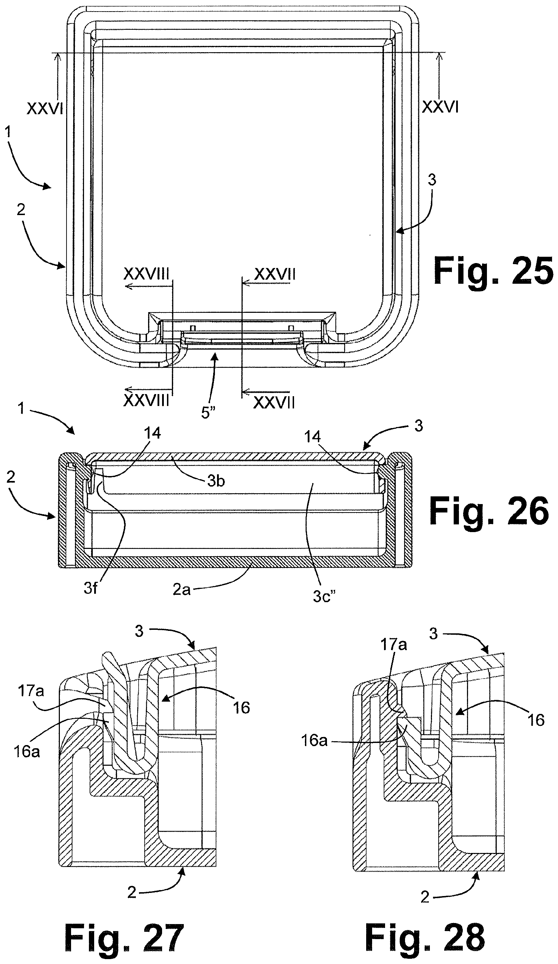

In this embodiment, even just the base 2 or the lid 3 may be made of the thermoplastic material englobing the antimicrobial substance: preferentially, on the other hand, both of the two parts are made of such a material. Also in this embodiment the base and the lid are hinged together. In this case, the hinge envisages a fixed hinge part on the base 2 and a movable hinge part on the lid 3. In this embodiment, and as may be noted also from Figures 22 and 23, the base 2 is generally quadrangular in shape with corresponding bottom wall 2a and peripheral wall 2c, there being identifiable in the latter two side wall portions 2c', a rear wall portion 2c" and a front wall portion (not indicated). In a region close to the intersection between each side portion 2c' and the rear portion 2c" projecting fixed pins, designated by 14 are defined (see also Figures 25-26). The aforesaid pins 14, which form the shaft of the hinge, are designed for insertion in respective through holes 15 provided in the peripheral wall 3c of the lid, and specifically in its side portions designated by 3c'. Preferentially, between the rear end of the side portions 3c' and the rear portion 3c" of the peripheral wall of the lid 3 there is provided at least one interruption 3f, aimed at facilitating insertion of the pins 14 in the openings 15. In practice, with this configuration, one of the openings 15 can be coupled to the corresponding pin 14, and then, exploiting the elasticity of the material, the opposite side portion 3c', close to the interruption 3f, can be slightly bent to obtain insertion of the second pin 14 in the corresponding opening 15 substantially by snap-action. In one embodiment, hence, such as the expemplified one, in the closed condition, the lid 3 is at least partially set in within the base, with the external profile of the front, side, and rear wall portions of the peripheral wall 3c of the lid that is at least in part embraced by the homologous portions of the peripheral wall 2c of the base 2. In the example represented, at least the edge of the side portions 3c' of the peripheral wall of the lid 3 is designed to bear upon a corresponding step 2d formed in the side wall portions 2c' of the base 2.

In a variant (not represented), the pins 14 are on the lid and the corresponding holes 15 on the base. It is also possible to provide holes both on the lid and on the base, with a single pin that functions as pivot between two holes of the base and two holes of the lid.

In one embodiment (not represented), the rear wall portion 3c" may envisage two interruptions 3f, each in the proximity of the corner with the side wall portions 3c, and the rear wall portion 3c" of the base 2 may envisage at least one contrast element, such as a projection or a step, sized and positioned so as to interfere with the part of the rear portion 3c" of the lid 3 comprised between the two interruptions 3f, to bring about elastic bending thereof. In this way, in the course of closing of the lid 3, the rear portion 3c" comes into contact with the contrast element 2e so that, in the sequel of the movement, it is bent and remains in a condition of elastic stress, when the case is in the closed position. Upon opening of the case, the portion 3c" tends to return elastically towards its own original configuration so as to obtain an "automatic" movement of opening of the lid.

Also in the embodiment of Figures 21-23, the closing device, here designated by 5", is formed integrally in the case 1, i.e., it has parts defined in a single piece with the base and the lid. Obviously, there is nothing to rule out also in this case a pushbutton-operated device, as in the case of the previous embodiment.

In the example, the lid 3 has an elastically deformable front tab 16, with a substantially U-shaped section, which defines in its front surface one or more teeth, in particular two lateral teeth 16a. On the other side, the front portion of the peripheral wall of the base 2 has a recess 17 and, in the proximity of the two opposite sides of the aforesaid recess, defines respective engagement teeth 17a, as may be noted for example in Figures 24, 27 and 28. As may be appreciated, in particular in Figure 21, with the case 1 in the closed position, accessible within the recess 17 is a part of the front of the tab 16 that is comprised between the corresponding teeth 16a.

The tab 16 is of course elastically deformable so as to achieve mutual engagement between the teeth 16a and 17a. In the condition where the case is closed, the aforesaid teeth are mutually engaged, as may be seen in Figures 24, 27, and 28. In order to bring about disengagement between the teeth 16a and 17a it is sufficient to push backwards the upper end of the front of the tab 16, which is accessible through the recess 17, until the aforesaid teeth disengage. The lid 3 can now be raised from the base 2 either manually or exploiting the elastic reaction of the rear wall 3c", as explained previously. Next, to obtain engagement of the device 5", it is sufficient to reclose the lid 3 on the base 2, pushing it until a new engagement is obtained between the teeth 16a-17a. Of course, the fact that the aforesaid teeth are provided with respective facing inclined planes facilitates closing during engagement and consequent elastic deformation of the engaged tab 16.

In this embodiment the base 2 is exemplified with double wall, at its side walls and the front wall, and a double wall may be provided also at the rear wall; this may bestow a better aesthetics, and/or a better outer surface uniformity, even in the case where the internal parts present a complex shape, or else may favour a better resting action. The base may in any case also be single-walled.

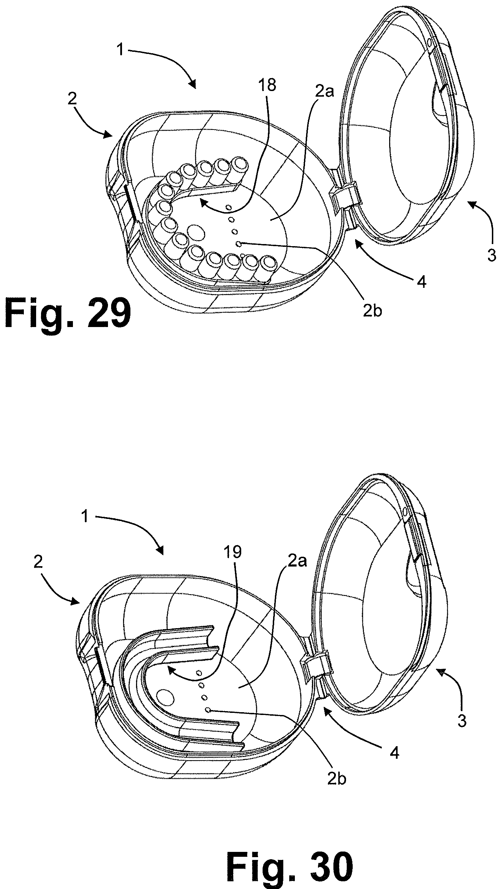

Figures 29 and 30 exemplify cases with a set of false teeth 19 and a bite 19, represented schematically, inside them. In one embodiment, the case 1 according to the invention can also be provided with positioning elements for the dental device.

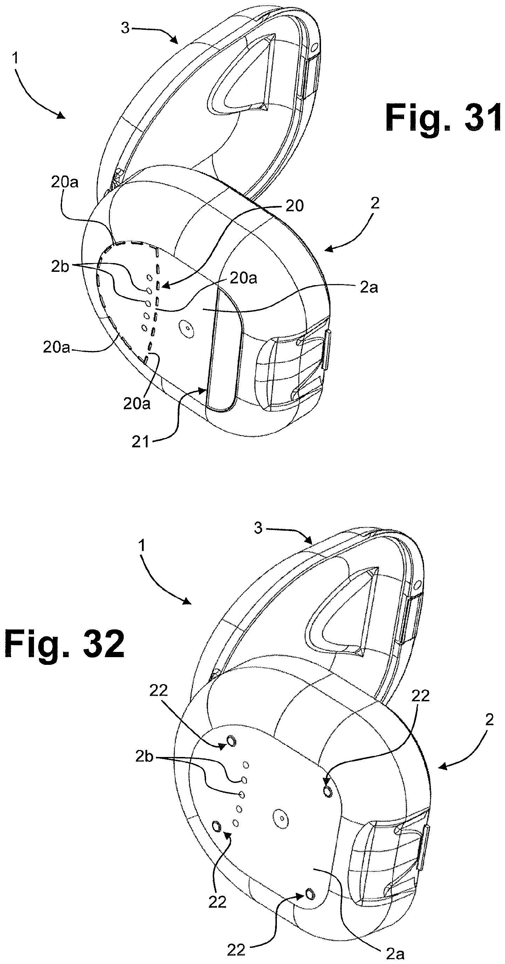

Figures 31 and 32 illustrate two possible embodiments of the invention, according to which the bottom wall 2a of the base 2 is provided, not only with through openings 2b, but also with resting elements on its outer surface. In the case of the embodiment of Figure 31, these resting elements basically comprise a wall jutting out 20, which projects from the outer surface of the bottom wall 2a and circumscribes at least in part a region in which the through openings 2b are provided, where the aforesaid wall 20 preferably has a series of interruptions or openings 20a. In this way, when the case 1 is rested on a generic surface, the resting wall 20 enables the bottom 2a to be kept raised from the aforesaid surface. The presence of the interruptions 20a enables circulation of air and/or free outflow of any possible fluids into the housing space, in particular outflow from within the case 1 towards the external environment. In the case of Figure 31, the bottom 2a preferably has a further resting wall 21, here without any interruptions, of a height equal to that of the wall 20 or in any case such as to enable regular (i.e., non-inclined) resting of the case 1.

In the embodiment of Figure 32, instead of one or more resting walls that circumscribe the region provided with the through openings 2b, the bottom wall is provided on the outside with reliefs or resting feet 22.

The case according to the invention enables the pre-set objects to be achieved effectively, in so far as it is simple to produce, easy to clean, and able to ensure an adequate antimicrobial action.

In general terms, the process of production of the case is very simple. For the aforesaid purpose, it is necessary to provide the basic synthetic material, as has been said, preferably of a random heterophasic type, such as a copolymer, in particular a polypropylene, as well as the antimicrobial substance with selected inorganic base, which is preferably a base of silver ions. Both of the starting materials are preferably in the form granules or pellets so that they can be easily mixed, or else are in the form of granules containing the various materials already mixed. For example, added to the polypropylene in granular or pellet form is the antimicrobial substance in granular form, with mixing of the two components, or else the thermoplastic material in the form of granules or pellets already contains the polypropylene and the antimicrobial substance mixed. Preferentially, the amount of antimicrobial substance is comprised between 2 wt% and 5 wt% of the mixture. The plastic material or the mixture thus formed is then fed to the moulding device, where it is brought to melting temperature, preferably comprised between 200°C and 250°C, in order to bring it to the molten state. The mixture in the molten state is then injected into the mould, which is preferably pre-heated to a temperature comprised between 20°C and 50°C. The injection pressure is preferably comprised between 100 bar and 400 bar. Once the mixture in the molten state has been injected into the mould, it is necessary to wait for its solidification, at a maintenance pressure indicatively comprised between 40 bar and 200 bar, for a period of between 2.5 and 10 s. The moulded component can then be taken out of the mould, whether it is the base, the lid, or the single piece defining the base and the lid, or other parts of the container. As has been mentioned previously, the mould used can be conveniently prearranged for obtaining also at least part of the hinge, and/or of the closing device of the case, as well as the through openings of the bottom.

The present applicant has conducted practical tests for producing a case according to the first embodiment described herein. For the purposes of the tests, a commercial polypropylene of a random heterophasic type was used (brand BOREALIS Borpact SG930MO). The antimicrobial substance used, of an inorganic type, was constituted by a masterbatch with a base of silver ions (brand FERRO US-0351). The granular inorganic ion-based substance was added to the polymer in pellet form in a weight percentage of 3%. The melting point of the mixture was approximately 230°C and the mixture in the molten state was injected into the mould at a pressure of 130 bar/MPa, the mould being pre-heated to approximately 30°C. After injection, the maintenance pressure was approximately 50 bar/MPa for approximately 4 s. This was followed by extraction from the mould.

The antimicrobial effect of the case thus obtained was tested, and a significant reduction in the proliferation of the following bacterial colonies was found: Escherichia Coli, Staphylococcus Aureus, Salmonella Enteritidis, Legionella Pneumophila, Listeria Monocytogenes. The aforesaid effects were obtained also simulating stagnation of water and saliva in the through openings of the bottom.

The case was subjected to 500 cycles of opening and closing; slight signs of whitening were observed around the hinge and the opening and closing device, but the case maintained its functionality perfectly. Tests of washing and drying were likewise carried out (with forced hot air and wiping), without any appreciable decrease in the antimicrobial capacity of the material being found.

From the foregoing description, the characteristics of the present invention emerge clearly, as likewise its advantages. It is evident that, for the person skilled in the branch, numerous variants are possible to the case described by way of example, without thereby departing from the scope of the present invention as defined in the ensuing claims.

In a possible embodiment, the bottom 2a of the base 2 is configured so as to facilitate outflow of possible liquids inside the space for housing the dental appliance, i.e., with the openings 2b in a lower region of the bottom. For the aforesaid purpose, it is for example possible to provide through openings in a rear region of the bottom 2a and of reliefs or feet in the front region of the bottom, which have a height such as to keep the bottom itself in an inclined condition, with the area provided with the openings 2b lower down, precisely in order to facilitate outflow of the liquids. Obviously, the arrangement could be reversed (openings and reliefs/rests in the front and rear regions of the bottom, respectively), or else the bottom could be purposely shaped to obtain the effect mentioned, for example with a generally concave bottom provided with openings 2b in the lower area (or with inclined walls that converge towards the aforesaid area) and resting feet/reliefs that in any case keep the case lying in a substantially plane condition when rested on a generic surface.

Among the possible variants there should also be mentioned the possibility of adding to the mixture of the polymeric material and the antibacterial substance a colouring additive to bestow a desired colouring on the case.

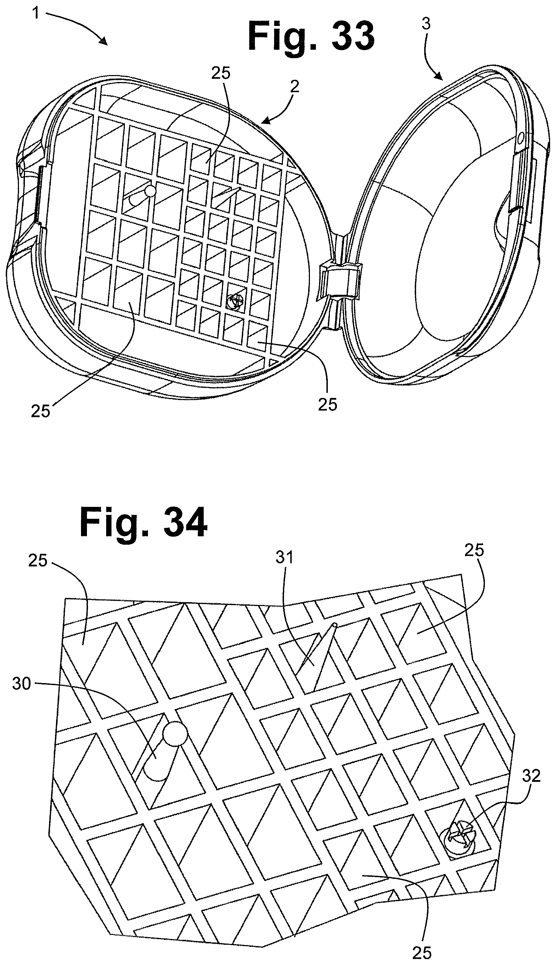

Figures 33 and 34 illustrate a variant of a container according to the invention, in which within the base positioning compartments 25 are defined, also of different dimensions, in particular for articles or small dental implements. In the example shown, there are represented by way of example a milling cutter 30, an endodontic post 31 and a pin 32 for fixing prostheses, i.e., a dentistry tool and two devices for dental implantation.

The compartments 25 are preferably provided in a single piece with the body of the container 1, but in possible other variants they are defined by a further container body that can be housed in the container 1 since the aforesaid further container body may be independent or interchangeable with respect to the container 1, albeit made of a material that includes the antimicrobial substance. The compartments 25 can have shapes that are the same or different from one another and are preferably configured for housing the corresponding articles or implements in a substantially vertical position, i.e., perpendicular to a lower surface of the base 2.

In the variant of Figures 33 and 34, the general shape of the container is similar to that of the case of Figures 1-13, but obviously the aforesaid shape could be different, for example of the type represented in the other attached figures.

It will be appreciated that the container according to the invention may be used advantageously, not only for its own functions of containment of dental articles, but also for obtaining disinfection thereof, for example after use, by bringing the article into contact with the material constituting the container.

## Claims

1. A dental item container, in particular for dental appliances for personal use, comprising at least one base (2) and one lid (3) that define therebetween a dental item housing space the, at least one of the base (2) and the lid (3) englobing a plastic material that incudes an antimicrobial substance, wherein at least one of the base (1) and the lid (2) has a wall (2a, 3a) with a region provided with one or more through openings (2b),
**characterized in that** said wall is a bottom wall (2a) of the base (2) having, in a surface thereof external to the housing space, at least one resting element (20-21; 22) that comprises at least one element in relief, to keep said bottom wall (2a) at a distance from a surface on which the container (1) can be rested, at least said region of said bottom wall (2a) including the plastic material that englobes the antimicrobial substance, said one or more openings (2b) being delimited by said material.

2. The container according to Claim 1, wherein the plastic material is a random heterophasic polymer, in particular a polypropylene.

3. The container according to Claim 1 or Claim 2, wherein the antimicrobial substance has an inorganic base, in particular containing an active principle with a base of silver ions.

4. The container according to Claim 1, wherein said bottom wall (2a) has at least one of:
- a surface external to the housing space with a plurality of said resting elements (20-21; 22),
- a surface internal to the housing space with one or more positioning elements (25) for a dental item.

5. The container according to any one of the preceding claims, wherein the lid (3) is hinged to the base (2) by means of a hinge (4) that is at least in part made of the plastic material englobing the antimicrobial substance.

6. The container according to Claim 5, wherein the hinge (4) comprises an elastically deformable central part (4a), to performs functions of elastic return of the lid (3) towards the base (2), and two lateral connection parts (4b), for guiding the movement of opening and closing of the lid (3) with respect to the base (2), the central part (4a) and the lateral part (4b) being formed integral between the base (2) and the lid (3).

7. The container according to any one of the preceding claims, comprising a closing device (5; 5'; 5") that is at least in part made of the plastic material englobing the antimicrobial substance.

8. The container according to any one of the preceding claims, wherein at least one of the base (2) and the lid (3) is entirely made of the plastic material englobing the antimicrobial substance, both the base (2) and the lid (3) being preferably entirely made of the plastic material englobing the antimicrobial substance.

9. The container according to any one of the preceding claims, comprising at least one sealing element (6, 7) which is operative between the base (2) and the lid (3), the sealing element being preferably made of the plastic material englobing the antimicrobial substance.

10. The container according to Claim 10, wherein the base (2) has a peripheral wall (2c) that defines, along its upper edge, a first lip or relief (6) having a restricted section compared to said peripheral wall (2c), the first lip or relief (6) forming one said sealing element.

11. The container according to Claim 11, wherein the cover (3) has a respective bottom wall (3b) and a peripheral wall (3c) along the edge of which is defined a second lip or relief (7), having a restricted section compared to the corresponding peripheral wall (3c), the second lip or relief (7) being designed to couple with the first lip or relief (6) of the peripheral wall (2c) of the base (2).

## Patentansprüche

1. Behälter für dentale Artikel, insbesondere für Dentalgeräte zum persönlichen Gebrauch, umfassend mindestens ein Unterteil (2) und einen Deckel (3), die dazwischen liegend einen Aufnahmeraum für dentale Artikel bilden, wobei das Unterteil (2) und/oder der Deckel (3) einen Kunststoffwerkstoff umfassen, der eine antimikrobielle Substanz einschließt, wobei das Unterteil (1) und/oder der Deckel (2) eine Wand (2a, 3a) mit einem Bereich aufweisen, der mit einer oder mehreren durchgehenden Öffnungen (2b) versehen ist,
**dadurch gekennzeichnet, dass** die Wand eine Bodenwand (2a) des Unterteils (2) ist, die in dessen einer Fläche außerhalb des Aufnahmeraums mindestens ein Ruheelement (20-21; 22) aufweist, das mindestens ein Element hervorgehoben einschließt, um die Bodenwand (2a) in einem Abstand von einer Fläche zu halten, auf welcher der Behälter (1) abgelegt werden kann, wobei zumindest der Bereich der Bodenwand (2a) den Kunststoffwerkstoff umfasst, der die antimikrobielle Substanz einschließt, wobei die eine oder mehrere Öffnungen (2b) durch den Werkstoff abgegrenzt sind.

2. Behälter nach Anspruch 1, wobei der Kunststoffwerkstoff ein statistisches, heterophasiges Polymer, insbesondere ein Polypropylen, ist.

3. Behälter nach Anspruch 1 oder Anspruch 2, wobei die antimikrobielle Substanz eine anorganische Base aufweist, die insbesondere einen aktiven Grundbestandteil mit einer Base aus Silberionen enthält.

4. Behälter nach Anspruch 1, wobei die Bodenwand (2a) aufweist:
- eine Fläche außerhalb des Aufnahmeraums mit einer Vielzahl der Ruheelemente (20-21; 22) und/oder
- eine Fläche innerhalb des Aufnahmeraums mit einem oder mehreren Positionierelementen (25) für einen dentalen Artikel.

5. Behälter nach einem der vorhergehenden Ansprüche, wobei der Deckel (3) an dem Unterteil (2) drehbar befestigt ist durch ein Scharnier (4), das zumindest teilweise aus dem die antimikrobielle Substanz einschließenden Kunststoffwerkstoff hergestellt ist.

6. Behälter nach Anspruch 5, wobei das Scharnier (4) einen elastisch verformbaren mittleren Teil (4a), der Funktionen einer elastischen Rückführung des Deckels (3) in Richtung des Unterteils (2) durchführt, und zwei seitliche Verbindungsteile (4b) umfasst, um die Öffnungs- und Schließbewegung des Deckels (3) bezüglich des Unterteils (2) zu führen, wobei der mittlere Teil (4a) und der seitliche Teil (4b) zwischen dem Unterteil (2) und dem Deckel (3) einstückig ausgebildet sind.

7. Behälter nach einem der vorhergehenden Ansprüche, umfassend eine Schließvorrichtung (5; 5'; 5"), die zumindest teilweise aus dem die antimikrobielle Substanz einschließenden Kunststoffwerkstoff hergestellt ist.

8. Behälter nach einem der vorhergehenden Ansprüche, wobei das Unterteil (2) und/oder der Deckel (3) vollständig aus dem die antimikrobielle Substanz einschließenden Kunststoffwerkstoff hergestellt sind, wobei sowohl das Unterteil (2) als auch der Deckel (3) vorzugsweise vollständig aus dem die antimikrobielle Substanz einschließenden Kunststoffwerkstoff hergestellt sind.

9. Behälter nach einem der vorhergehenden Ansprüche, umfassend mindestens ein Dichtungselement (6, 7), das zwischen dem Unterteil (2) und dem Deckel (3) wirksam wird, wobei das Dichtungselement vorzugsweise aus dem die antimikrobielle Substanz einschließenden Kunststoffwerkstoff hergestellt ist.

10. Behälter nach Anspruch 10, wobei das Unterteil (2) eine Umfangswand (2c) aufweist, die längs ihrer oberen Kante einen ersten Ansatz oder Aussparung (6) mit einem begrenzten Querschnitt im Vergleich zu der Umfangswand (2c) bildet, wobei der erste Ansatz oder die erste Aussparung (6) das eine Dichtungselement bilden.

11. Behälter nach Anspruch 11, wobei die Abdeckung (3) eine jeweilige Bodenwand (3b) und eine Umfangswand (3c) aufweist, an deren Kante ein zweiter Ansatz oder Aussparung (7) mit einem begrenzten Querschnitt im Vergleich zu der entsprechenden Umfangswand (3c) gebildet ist, wobei der zweite Ansatz oder Aussparung (7) so gestaltet sind, um den ersten Ansatz oder Aussparung (6) der Umfangswand (2c) des Unterteils (2) zu verbinden.

## Revendications

1. Récipient d'article dentaire, en particulier pour des appareils dentaires à usage personnel, comprenant au moins une base (2) et un couvercle (3) qui définissent entre eux un espace de logement d'article dentaire, le, au moins un parmi la base (2) et le couvercle (3) englobant une matière plastique qui comprend une substance antimicrobienne, dans lequel au moins l'un parmi la base (1) et le couvercle (2) a une paroi (2a, 3a) avec une région prévue avec une ou plusieurs ouvertures débouchantes (2b),
**caractérisé en ce que** ladite paroi est une paroi inférieure (2a) de la base (2) ayant, dans sa surface à l'extérieur de l'espace de logement, au moins un élément d'appui (20-21 ; 22) qui comprend au moins un élément en relief, pour maintenir ladite paroi inférieure (2a) à une certaine distance d'une surface sur laquelle le récipient (1) peut être appuyé, au moins ladite région de ladite paroi inférieure (2a) comprenant la matière plastique qui englobe la substance antimicrobienne, lesdites une ou plusieurs ouvertures (2b) étant délimitées par ledit matériau.

2. Récipient selon la revendication 1, dans lequel la matière plastique est un polymère hétérophasique aléatoire, en particulier un polypropylène.

3. Récipient selon la revendication 1 ou la revendication 2, dans lequel la substance antimicrobienne a une base non organique, en particulier comprenant un principe actif avec une base d'ions d'argent.

4. Récipient selon la revendication 1, dans lequel ladite paroi inférieure (2a) a au moins l'une parmi :
- une surface à l'extérieur de l'espace de logement avec une pluralité desdits éléments d'appui (20-21 ; 22),
- une surface à l'intérieur de l'espace de logement avec un ou plusieurs éléments de positionnement (25) pour un article dentaire.

5. Récipient selon l'une quelconque des revendications précédentes, dans lequel le couvercle (3) est articulé à la base (2) au moyen d'une charnière (4) qui est au moins en partie réalisée à partir de la matière plastique englobant la substance antimicrobienne.

6. Récipient selon la revendication 5, dans lequel la charnière (4) comprend une partie centrale élastiquement déformable (4a), pour réaliser les fonctions de rappel élastique du couvercle (3) vers la base (2), et deux parties de raccordement latérales (4b) pour guider le mouvement d'ouverture et de fermeture du couvercle (3) par rapport à la base (2), la partie centrale (4a) et la partie latérale (4b) étant formées de manière solidaire entre la base (2) et le couvercle (3).

7. Récipient selon l'une quelconque des revendications précédentes, comprenant un élément de fermeture (5 ; 5' ; 5") qui est au moins en partie réalisé à partir de la matière plastique englobant la substance antimicrobienne.

8. Récipient selon l'une quelconque des revendications précédentes, dans lequel au moins l'un parmi la base (2) et le couvercle (3) est entièrement réalisé à partir de matière plastique englobant la substance antimicrobienne, à la fois la base (2) et le couvercle (3) étant de préférence entièrement réalisés à partir de la matière plastique englobant la substance antimicrobienne.

9. Récipient selon l'une quelconque des revendications précédentes, comprenant au moins un élément d'étanchéité (6, 7) qui est opérationnel entre la base (2) et le couvercle (3), l'élément d'étanchéité étant de préférence réalisé à partir de la matière plastique englobant la substance antimicrobienne.

10. Récipient selon la revendication 10, dans lequel la base (2) a une paroi périphérique (2c) qui définit, le long de son bord supérieur, une première lèvre ou relief (6) ayant une section limitée par rapport à ladite paroi périphérique (2c), la première lèvre ou relief (6) formant ledit élément d'étanchéité.

11. Récipient selon la revendication 11, dans lequel le couvercle (3) a une paroi inférieure (3b) respective et une paroi périphérique (3c) le long du bord de laquelle est défini(e) une seconde lèvre ou relief (7), ayant une section limitée par rapport à la paroi périphérique (3c) correspondante, la seconde lèvre ou relief (7) étant conçu(e) pour se coupler avec la première lèvre ou relief (6) de la paroi périphérique (2c) de la base (2).
